# FASCICULE DE BREVET EUROPEEN

(11) **EP 1 507 692 B1**
(45) Date de publication et mention de la délivrance du brevet: **18.08.2010**
(21) Numéro de dépôt: 03727361.2
(22) Date de dépôt: 25.04.2003
(51) Int. Cl.: B60T 13/57, B60T 13/575

(54) **SERVOMOTEUR COMPORTANT UN ELEMENT FLOTTANT PORTEUR DE SIEGES DE CLAPET DECALES**
BREMSKRAFTVERSTÄRKER MIT BEWEGLICHEM TRAGELEMENT FÜR EINEN VERSETZTEN VENTILSITZ
BRAKE SERVO-UNIT COMPRISING A FLOATING ELEMENT BEARING OFFSET VALVE SEATS

(30) Priorité: 07.05.2002 FR 0205767
(43) Date de publication de la demande: 23.02.2005
(73) Titulaire: ROBERT BOSCH GMBH, 70442 Stuttgart (DE)
(72) Inventeur: RICHARD, Philippe, F-77500 CHELLES (FR); LACROIX, Stéphane, F-77220 TOURNAN EN BRIE (FR); VERBO, Ulysse, F-93600 AULNAY-SOUS-BOIS (FR); MALIGNE, Jean-Charles, F-93300 AUBERVILLIERS (FR)
(74) Mandataire: Hurwic, Aleksander Wiktor
(86) Numéro de dépôt international: PCT/EP2003/004312
(87) Numéro de publication internationale: WO 2003/095281

(56) Documents cités:
- DE-A- 19 741 133
- DE-A- 19 835 772
- FR-A- 2 687 972
- US-B1- 6 269 731

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure à la première pression, qui est susceptible de solliciter une tige d'actionnement d'un maître cylindre associé au servomoteur par l'intermédiaire d'un disque de réaction, et qui est rappelée élastiquement par des premiers moyens de rappel, du type qui comporte une tige de commande se déplaçant dans le piston sélectivement en fonction d'un effort axial d'entrée exercé vers l'avant à l'encontre d'un effort de rappel exercé sur la tige par des deuxièmes moyens de rappel, du type dans lequel les mouvements de la tige de commande sont susceptibles de déterminer les ouvertures et fermetures d'au moins un clapet axial dit "d'admission" qui est interposé entre une source de pression soumise à la pression supérieure à la première pression et la chambre arrière, et d'au moins un clapet axial dit "de rééquilibrage" qui est interposé entre la chambre avant et la chambre arrière, pour actionner la cloison mobile, et du type dans lequel un plongeur, traversant la cloison mobile et solidaire de l'extrémité de la tige de commande, est susceptible de solliciter directement la tige d'actionnement du maître-cylindre par l'intermédiaire du disque de réaction.

On connaît de nombreux exemples de servomoteurs conventionnels de ce type, par exemple, du document DE-A-19 741 133.

Dans un tel servomoteur, un piston est solidaire de la paroi mobile dans laquelle il est par exemple emboîté, et il reçoit les clapets d'admission et de rééquilibrage. Par ailleurs, le clapet de rééquilibrage et le clapet d'admission font partie d'un clapet unique à trois voies dont un siège commun est constitué d'une face avant d'épaulement d'un élément mobile qui est rappelé élastiquement contre une collerette du plongeur et contre une collerette du piston desquelles il est susceptible d'être sélectivement disjoint pour ouvrir le clapet de rééquilibrage ou le clapet d'admission.

Ainsi, un conduit sensiblement radial qui traverse le piston et qui débouche dans la chambre avant et un conduit sensiblement axial qui débouche à l'extérieur du servomoteur sont susceptibles d'être mis sélectivement en communication par l'intermédiaire d'un des clapets avec un conduit radial qui traverse le piston et qui débouche dans la chambre arrière pour maintenir ou annuler une différence de pression entre les chambres arrière et provoquer les déplacements de la cloison mobile.

Une telle conception présente l'inconvénient de nécessiter des conduits réalisés dans le piston suivant des formes complexes, qui perturbent l'écoulement de l'air. De ce fait, un servomoteur présente généralement des temps de réponse relativement élevés, et se révèle bruyant.

Par ailleurs, une telle conception est particulièrement onéreuse à mettre en oeuvre, car elle nécessite d'utiliser un piston dont les formes intérieures, destinées à former les conduits, ne peuvent être réalisées que par un procédé d'usinage.

L'invention propose une conception permettant de remédier à ces inconvénients dans laquelle les conduits sont axiaux et font partie de différents éléments tubulaires du servomoteur. Cette conception permet de favoriser l'écoulement de l'air au travers de clapets, ce qui permet de réduire les temps de réponse du servomoteur tout en lui garantissant un fonctionnement silencieux. De surcroît, cette nouvelle conception permet de réaliser la plupart des éléments du servomoteur à l'aide d'un procédé d'emboutissage, moins onéreux que les procédés d'usinage ou de moulage conventionnels.

Dans ce but, l'invention propose un servomoteur du type décrit précédemment, **caractérisé en ce qu**'il comporte :
- un élément tubulaire flottant monobloc, interposé sensiblement radialement entre le plongeur et l'enveloppe piston, qui est mobile axialement et qui est rappelé élastiquement vers la cloison mobile par l'intermédiaire de troisièmes moyens de rappel, dont des faces transversales décalées axialement comportent des premiers éléments d'étanchéité des clapets axiaux d'admission et de rééquilibrage,
- un second élément transversal complémentaire d'étanchéité du clapet axial d'admission, porté par l'extrémité arrière du plongeur,
- un second élément transversal complémentaire d'étanchéité du clapet axial de rééquilibrage, agencé sur au moins une portion de la face arrière de la cloison mobile,
et en ce que l'extrémité arrière du plongeur comporte une coupelle qui comporte le second élément transversal complémentaire d'étanchéité du clapet axial d'admission et qui reçoit en appui les extrémités de deux ressorts coaxiaux dont un premier, de raideur élevée et dont l'autre extrémité est en appui sur la cloison mobile, forme les deuxièmes moyens de rappel associés à la tige de commande, et dont le second, de raideur réduite et dont l'autre extrémité est en en appui sur une face d'épaulement de l'élément tubulaire, forme les troisièmes moyens de rappel associés au dit élément tubulaire et permet de le solliciter pour fermer le clapet de rééquilibrage.

Selon d'autres caractéristiques de l'invention :
- l'élément tubulaire flottant comporte:
   - un tronçon tubulaire avant, qui est monté de manière étanche autour d'une portée tubulaire de la cloison mobile recevant en coulissement le plongeur, dont l'extrémité avant, portant le premier élément d'étanchéité du clapet de rééquilibrage en regard du second élément d'étanchéité du clapet de rééquilibrage porté par la cloison mobile, est agencée radialement à l'extérieur d'au moins un perçage de communication traversant la cloison,
   - un tronçon tubulaire intermédiaire, qui communique avec la chambre arrière,
   - un tronçon tubulaire arrière, d'un diamètre inférieur au diamètre du tronçon intermédiaire, qui est guidé en coulissement de manière étanche dans un tronçon tubulaire arrière de l'enveloppe, qui forme un conduit d'admission alimenté par la source de pression soumise à la pression supérieure à la première pression, et dont une face transversale avant de jonction avec le tronçon intermédiaire porte le second élément d'étanchéité du clapet d'admission en regard de la coupelle du plongeur,
- le premier élément d'étanchéité du clapet de rééquilibrage est constitué d'un joint qui est reçu dans le tronçon avant de l'élément tubulaire flottant,
- le second élément d'étanchéité du clapet de rééquilibrage est constitué d'une portion de la face arrière de la cloison mobile,
- le premier élément d'étanchéité du clapet d'admission est constitué d'une face transversale avant d'une paroi de jonction des tronçons intermédiaire et arrière de l'élément tubulaire flottant,
- le second élément d'étanchéité du clapet d'admission est constitué d'un joint qui est porté par une face arrière de la coupelle solidaire du plongeur,
- la portée tubulaire de guidage du plongeur portée par la cloison mobile s'étend axialement à partir de la face arrière de la cloison mobile et la cloison mobile comporte une pluralité de perçages répartis angulairement au travers de la cloison transversale autour de la jonction de sa portée tubulaire et de sa face arrière,
- le premier ressort est agencé intérieurement au second ressort, et les deux ressorts sont montés à l'intérieur de l'élément tubulaire,
- le premier ressort est interposé entre une face avant de la coupelle et une face d'épaulement de la portée tubulaire avant, et le second ressort est interposé entre la face avant de la coupelle et des faces transversales d'extrémité avant de lumières longitudinales opposées du tronçon intermédiaire de l'élément tubulaire qui permettent la communication avec la chambre arrière,
- le premier ressort est agencé extérieurement au second ressort, et les deux ressorts sont montés à l'extérieur de l'élément tubulaire par l'in.termédiaire d'une bague annulaire de maintien dont au moins deux bras radiaux diamétralement opposés traversent des lumières associées de l'élément tubulaire pour prendre appui sur la coupelle,
- le premier ressort est interposé entre une face d'épaulement de la bague annulaire et une cloche d'appui qui entoure l'élément tubulaire et qui est solidaire de la cloison mobile, et le second ressort est interposé entre une face d'extrémité de la bague annulaire tubulaire et une face transversale d'épaulement de l'élément tubulaire qui délimite son tronçon avant et son tronçon intermédiaire.
- le tronçon arrière de l'élément tubulaire est monté de manière étanche dans le tronçon arrière de l'enveloppe par l'intermédiaire d'un joint à lèvre,
- le plongeur est monté coulissant dans la portée tubulaire de la cloison mobile par l'intermédiaire d'un élément tubulaire coulissant dont une collerette avant est agencée en regard du disque de.réaction et qui est susceptible d'être sollicité par une collerette du plongeur pour un effort d'intensité déterminée pour transmettre l'effort de réaction de la tige d'actionnement du maître cylindre pour partie à la tige de commande du servomoteur et pour partie à la cloison mobile,
- la cloison mobile, l'élément tubulaire flottant, et la coupelle solidaire du plongeur sont réalisés par des procédés de découpe et d'emboutissage.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servofrein comportant un servomoteur pneumatique d'assistance au freinage réalisé conformément à un état antérieur de la technique ;
- la figure 2 est une vue de détail du servomoteur de la figure 1 ;
- la figure 3a est une vue en perspective des éléments internes à l'enveloppe d'un servomoteur selon un premier mode de réalisation de l'invention,
- la figure 3b est une vue en perspective des éléments internes à l'enveloppe d'un servomoteur selon un second mode de réalisation de l'invention,
- les figures 4a et 4b sont des vues de détail en coupe axiale de servomoteurs associés respectivement aux premier et second modes de réalisation de l'invention, le plongeur étant en repos, le clapet de rééquilibrage étant ouvert et le clapet d'admission étant fermé,
- les figures 5a et 5b sont des vues de détail en coupe de servomoteurs associés respectivement aux premier et second modes de réalisation de l'invention, le plongeur étant actionné et le clapet de rééquilibrage et le clapet d'admission étant fermés,
- les figures 6a et 6b sont des vues de détail en coupe de servomoteurs associés respectivement aux premier et second modes de réalisation de l'invention, le plongeur étant actionné, le clapet de rééquilibrage étant fermé et le clapet d'admission étant ouvert,
- les figures 7a et 7b sont des vues de détail en coupe de servomoteurs associés respectivement aux premier et second modes de réalisation de l'invention, le plongeur étant relâché, le clapet de rééquilibrage étant rouvert et le clapet d'admission étant refermé,

Dans la description qui va suivre, des chiffres de référence identiques désignent des pièces identiques ou ayant des fonctions similaires.

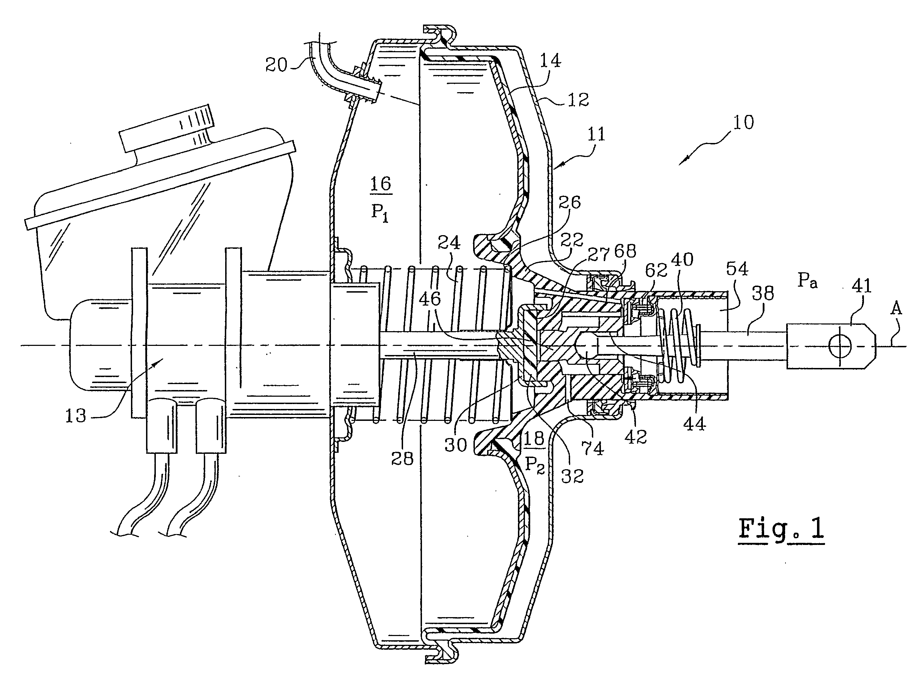

Par convention, les termes "avant", "arrière", supérieur", "inférieur" désignent respectivement des éléments ou des positions orientés respectivement vers la gauche, la droite, le haut, ou le bas des figures 1 à 7b.

On a représenté à la figure 1 l'ensemble d'un servofrein 10 comportant un servomoteur 11 pneumatique conventionnel d'assistance au freinage pour un véhicule automobile. Le servomoteur 11 est destiné à actionner un maître-cylindre 13 de freinage du véhicule.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁", et une chambre arrière 18 soumise à une deuxième pression "P₂". La deuxième pression "P₂" est susceptible de varier entre la valeur de la pression "P₁" et la valeur d'une pression "Pₐ" supérieure à la pression "P₁" pour provoquer les déplacements de la cloison 14, qui est susceptible de solliciter, comme on le verra ultérieurement une tige 28 d'actionnement du maître-cylindre 13.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vidé du véhicule.

La chambre avant 16 est reliée à la source de dépression du véhicule par l'intermédiaire d'un conduit 20 de dépression qui débouche dans l'enveloppe 12.

Le servomoteur pneumatique 11 comporte un piston mobile 22 d'axe A qui est solidaire de la cloison mobile 14. Par exemple, le piston mobile 22 est emboîté au travers de la cloison mobile 14.

A l'intérieur de l'enveloppe 12, la cloison mobile 14 est rappelée élastiquement vers l'arrière par des premiers moyens de rappel constitués d'un ressort 24 de rappel qui prend appui sur l'enveloppe 12 et sur une face avant 26 du piston mobile 22. La face avant 26 du piston mobile. 22 comporte une portée cylindrique avant 27, qui est agencée en regard d'un disque 32 de réaction qui est logé dans une coupelle 30 solidaire de la tige 28 d'actionnement du maître-cylindre 13.

Une tige 38 de commande, qui est par exemple reliée à une pédale de frein du véhicule par l'intermédiaire d'un manchon 41 d'accouplement, est susceptible de se déplacer dans l'enveloppe 12, et plus particulièrement dans le piston mobile 22, sélectivement en fonction d'un effort axial d'entrée exercé vers l'avant sur le manchon 41. L'effort d'actionnement est exercé à l'encontre d'un effort de rappel produit sur la tige 38 par des deuxièmes moyens de rappel, notamment un ressort de rappel 40 qui est interposé entre le piston mobile 22 et la tige 38 de commande.

L'extrémité avant de la tige 38 de commande qui est opposée au manchon 41 est conformée en rotule 42 et elle est reçue dans un logement 44 complémentaire d'un plongeur 46 sensiblement cylindrique qui est monté coulissant dans le piston mobile 22.

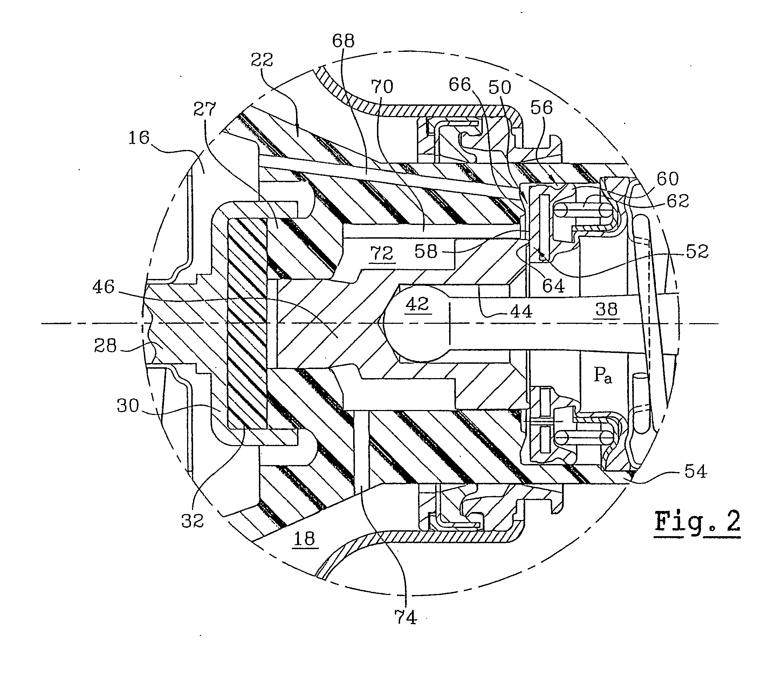

Comme l'illustre plus particulièrement la figure 2, les mouvements de la tige 38 de commande sont susceptibles de déterminer les ouvertures et fermetures d'au moins un clapet 52 axial dit "d'admission" qui est interposé entre une source de pression soumise à la pression "Pₐ" supérieure à la première pression "P₁" et la chambre 18 arrière, et d'au moins un clapet 50 axial dit "de rééquilibrage" qui est interposé entre la chambre 16 avant et la chambre 18 arrière, pour actionner la cloison mobile précédemment décrite.

De manière connue, et de manière non limitative de l'invention, la source de pression soumise à la pression "Pₐ" correspond au milieu atmosphérique ambiant. A cet effet, le clapet 52 débouche directement dans une extrémité arrière 54 du corps du piston 22 formant un conduit axial qui est ouvert à l'air libre.

De manière conventionnelle, le clapet 50 de rééquilibrage et le clapet 52 d'admission font partie d'un clapet 56 unique à trois voies dont un siège commun 58 est constitué d'une face avant d'épaulement d'un élément 60 annulaire mobile qui est rappelé élastiquement par un ressort 62 contre une collerette 64 du plongeur 46 et contre une collerette 66 du piston 22.

Ainsi, un conduit 68 sensiblement radial qui traverse le piston 22 et qui débouche dans la chambre avant 16, ou bien le conduit 54 sensiblement axial qui débouche à l'extérieur du servomoteur 11, sont susceptibles d'être mis sélectivement en communication, par l'intermédiaire d'un alésage 72 de guidage du plongeur et d'une rainure 70 formée dans cet alésage, avec un conduit radial 74 qui traverse le piston 22 et qui débouche dans la chambre arrière 18 pour maintenir ou annuler une différence de pression entre les chambres avant 16 et arrière 18 et provoquer ainsi les déplacements de la cloison mobile 14.

Les clapets 52 d'admission et 50 de rééquilibrage sont rappelés élastiquement vers une position de fermeture du clapet 52 d'admission et d'ouverture du clapet 50 de rééquilibrage par les deuxièmes moyens de rappel constitués du ressort 40 de la tige 38 de commande.

Une telle conception est particulièrement onéreuse à mettre en oeuvre, car elle nécessite d'utiliser un piston dont les formes intérieures, destinées à former les conduits 68 et 74, ne peuvent être réalisées que par un procédé d'usinage.

Pour remédier à cet inconvénient, l'invention propose un servomoteur 11 du type décrit précédemment dans lequel les conduits d'admission et de rééquilibrage sont formés dans des éléments tubulaires du servomoteur 11.

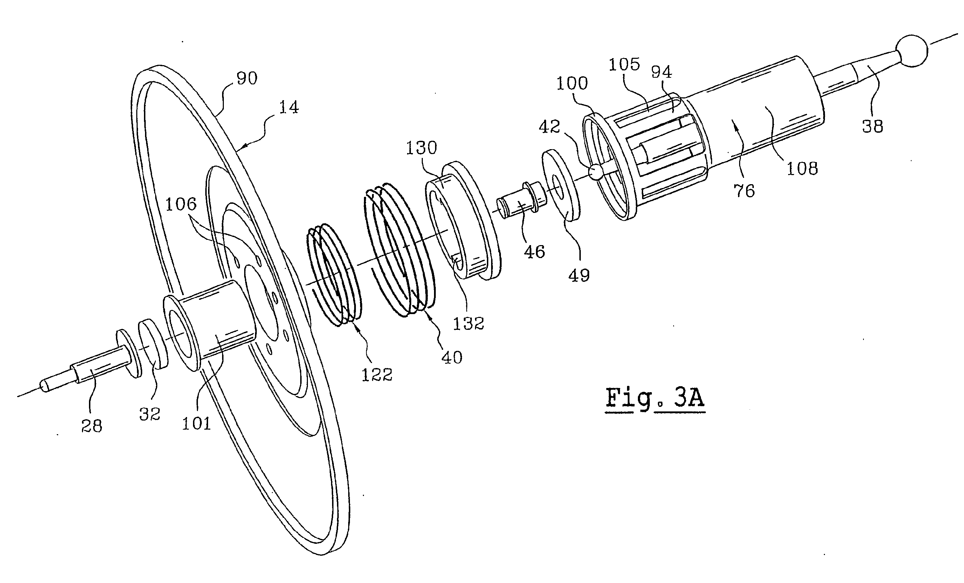

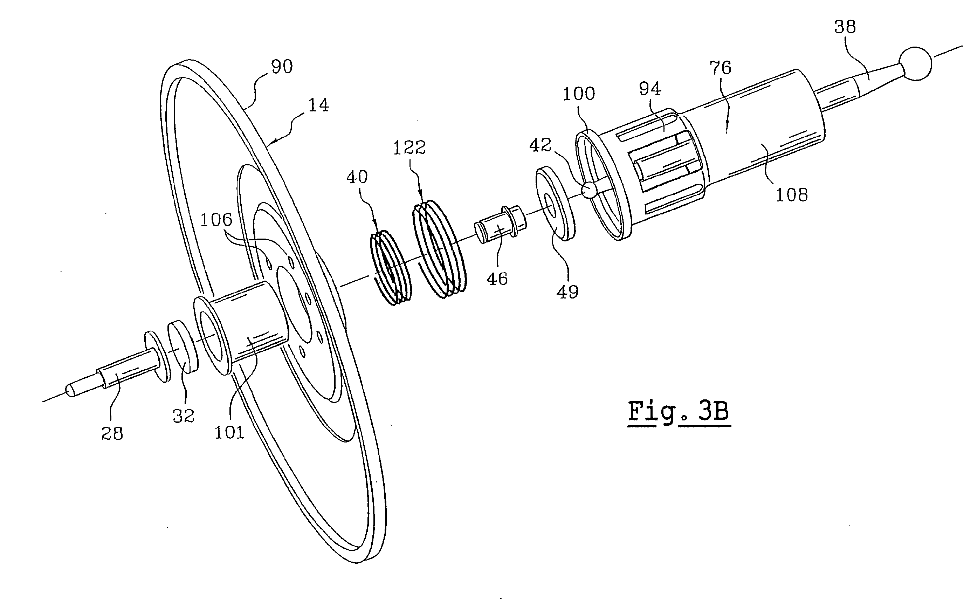

A cet effet, comme l'illustrent les figures 3 et suivantes, le servomoteur 11 est dépourvu de piston et il comporte :
- un élément 76 tubulaire flottant monobloc, interposé sensiblement radialement entre le plongeur 46 et l'enveloppe 12, qui est mobile axialement et qui est rappelé élastiquement vers la cloison mobile 14 par l'intermédiaire de troisièmes moyens de rappel, dont des faces 78, 80 transversales décalées axialement comportent des premiers éléments 82, 84 d'étanchéité des clapets axiaux d'admission et de rééquilibrage 50, 52,
- un second élément 86 transversal complémentaire d'étanchéité du clapet 52 axial d'admission, porté par l'extrémité arrière 45 du plongeur 46,
- un second élément 88 transversal complémentaire d'étanchéité du clapet 50 axial de rééquilibrage, agencé sur au moins une portion de la face arrière 90 de la cloison 14 mobile.

Par ailleurs, l'extrémité arrière 45 du plongeur 46 comporte une coupelle 49 qui comporte le second élément 86 transversal complémentaire d'étanchéité du clapet 52 axial d'admission et qui reçoit en appui les extrémités 41, 123 de deux ressorts 40, 122 concentriques dont un premier ressort 40, de raideur élevée et dont l'autre extrémité 39 est en en appui sur la cloison mobile 14, forme les deuxièmes moyens de rappel associés à la tige 38 de commande, et dont un second ressort 122, de raideur réduite et dont l'autre extrémité 121 est en en appui sur une face d'épaulement de l'élément 76 tubulaire, forme les troisièmes moyens de rappel associés au dit élément tubulaire 76 et permet de le solliciter pour fermer le clapet 50 de rééquilibrage.

Comme on le verra ultérieurement dans la suite de la présente description, les ressorts 40 et 122 peuvent occuper deux dispositions particulières associées chacune à un mode de réalisation particulier de l'invention.

Dans les deux modes de réalisation de l'invention, l'élément 76 tubulaire flottant comporte un tronçon 100 tubulaire avant, qui est monté de manière étanche autour d'une portée 98 tubulaire de la cloison 14 mobile qui reçoit en coulissement le plongeur 46. L'extrémité avant 102 du tronçon avant 100 tubulaire porte le premier élément 84 d'étanchéité du clapet 50 de rééquilibrage en regard du second élément 88 d'étanchéité du clapet 50 de rééquilibrage porté par la cloison mobile 14. L'extrémité avant 102 du tronçon avant 100 est agencée radialement à l'extérieur d'au moins un perçage 106 de communication traversant la cloison 14.

Conformément à l'invention, l'élément 76 tubulaire flottant comporte aussi un tronçon 94 tubulaire intermédiaire, qui communique avec la chambre arrière 18 par l'intermédiaire de lumières 105.

L'élément 76 tubulaire flottant comporte enfin un tronçon 108 tubulaire arrière, d'un diamètre inférieur au diamètre du tronçon 94 intermédiaire, qui est guidé en coulissement de manière étanche dans un tronçon 109 tubulaire arrière de l'enveloppe 12.

En particulier, le tronçon 108 tubulaire arrière est monté coulissant au travers d'un joint à lèvre 113 porté par le tronçon tubulaire 109 arrière de l'enveloppe 12.

Avantageusement le tronçon 108 tubulaire arrière forme un conduit d'admission alimenté par la source de pression soumise à la pression "Pₐ" supérieure à la première pression "P₁".

Avantageusement, une face 78 transversale avant de jonction avec le tronçon intermédiaire 94 porte le premier élément 82 d'étanchéité du clapet 52 d'admission en regard de la coupelle 49 du plongeur 46.

Plus particulièrement, le premier élément 82 d'étanchéité du clapet 52 d'admission est simplement constitué de la face 78 transversale de jonction des tronçons intermédiaire 94 et arrière 108 de l'élément 76 tubulaire flottant, et le second élément d'étanchéité 86 du clapet d'admission 52 est constitué d'un joint qui est porté par une face arrière 87 de la coupelle 49 solidaire du plongeur 46. De préférence, le joint 86 est emboîté et/ou collé dans une gorge pratiquée dans la face arrière 87 du plongeur 49.

Par ailleurs, le premier élément 84 d'étanchéité du clapet 50 de rééquilibrage est constitué d'un joint qui est emboîté et/ou collé dans un alésage 103 de l'extrémité 102 du tronçon avant 100 de l'élément 76 tubulaire flottant, et le second élément 88 d'étanchéité du clapet 50 de rééquilibrage est constitué d'une portion de la face arrière 90 de la cloison mobile 14.

Ces dispositions ne sont pas limitatives de l'invention, et les joints pourraient être portés respectivement par la face 78 transversale de jonction des tronçons intermédiaire 94 et arrière 108 et par la face arrière 90 de la cloison mobile 14.

La portée 98 tubulaire de guidage du plongeur 46 qui est portée par la cloison mobile 14 s'étend axialement à partir de la face 90 arrière de la cloison 14 mobile avec laquelle elle est de préférence venue de matière.

Plus particulièrement, le plongeur 46 est monté coulissant dans la portée tubulaire 98 de la cloison mobile 14 par l'intermédiaire d'un élément tubulaire 101 qui est monté coulissant dans un alésage 99 de la portée tubulaire 98 et dont une collerette avant 107 est agencée en regard du disque 32 de réaction. L'élément tubulaire 101 est susceptible d'être sollicité par une collerette 111 du plongeur 46 pour un effort d'intensité déterminée pour transmettre l'effort de réaction de la tige d'actionnement du maître cylindre pour partie à la tige 38 de commande du servomoteur et pour partie à la cloison mobile 14.

Un tel élément tubulaire 101 étant largement connu de l'état de la technique il ne sera pas décrit de manière plus explicite dans la suite de la présente description.

Dans cette configuration, le tronçon avant 100 coulisse de manière étanche sur ladite portée tubulaire 98 par l'intermédiaire d'une lèvre 85 du joint 84. Pour permettre au clapet .50 de rééquilibrage d'interrompre ou d'autoriser la communication entre la chambre avant 16 et la chambre arrière 18, la cloison 14 mobile comporte une pluralité de perçages 106 répartis angulairement au travers de la cloison 14 transversale autour de la jonction de sa portée 98 tubulaire et de sa face 90 arrière. Cette configuration permet par ailleurs d'assurer un écoulement optimum de l'air au travers de la paroi mobile 14 lorsque le clapet de rééquilibrage 50 est ouvert.

Selon un premier mode de réalisation de l'invention qui est représenté aux figures 3a à 7a, le premier ressort 40, de raideur élevée, est agencé extérieurement au second ressort 122, de raideur réduite. Par ailleurs, 40 et 122 les deux ressorts sont montés à l'extérieur de l'élément 76 tubulaire en appui sur la coupelle 49 par l'intermédiaire d'une bague 130 annulaire de maintien dont au moins deux bras 132 radiaux diamétralement opposés traversent des lumières associées de l'élément tubulaire 76 pour prendre appui sur la coupelle 49.

En particulier, la bague 130 annulaire comporte deux bras 132 diamétralement opposés qui traversent les lumières 105 du tronçon 94 intermédiaire de l'élément 76 tubulaire flottant.

Plus particulièrement, le premier ressort 40 est interposé entre une face d'épaulement 134 de la bague annulaire 130 et une cloche d'appui 136 qui entoure le tronçon avant 100 de l'élément tubulaire 76 et qui est en réaction sur la cloison mobile 14, et le second ressort 122 est interposé entre une face d'extrémité 138 de la bague annulaire tubulaire et une face 140 transversale arrière d'épaulement de l'élément 76 tubulaire qui est agencée à l'arrière de la paroi délimitant son tronçon 100 avant et son tronçon 94 intermédiaire.

Selon un premier mode de réalisation de l'invention qui est représenté aux figures 3b à 7b, le premier ressort 40 est agencé intérieurement au second ressort 122, et les deux ressorts 40, 122 sont montés à l'intérieur de l'élément 76 tubulaire.

Plus particulièrement le premier ressort est interposé entre une face avant 142 de la coupelle 49 et une face d'épaulement 144 de la portée tubulaire 98 avant, et le second ressort 122 est interposé entre la face avant 142 de la coupelle 49 et des faces transversales 146 d'extrémité avant des lumières 105 longitudinales opposées du tronçon intermédiaire 94 de l'élément 76 tubulaire qui permettent la communication avec la chambre arrière 18.

Un avantage particulier des deux modes de réalisation de l'invention est que la cloison 14 mobile, l'élément 76 tubulaire flottant, la coupelle 49 solidaire du plongeur 46 sont réalisés de préférence par des procédés de découpe et d'emboutissage. Dans le premier mode de réalisation de l'invention, la bague 130 est elle aussi réalisée de préférence par des procédés de découpe et d'emboutissage. Cette configuration est particulièrement avantageuse car elle permet de réaliser le servomoteur 11 avec des coûts de fabrication extrêmement réduits.

Par ailleurs, dans les deux modes de réalisation de l'invention, la cloison mobile 14 et l'élément 76 tubulaire présentant des formes tubulaires simples, l'écoulement de l'air est favorisé au travers de clapets 50 et 52, ce qui permet de réduire les temps de réponse du servomoteur 11 tout en lui garantissant un fonctionnement silencieux.

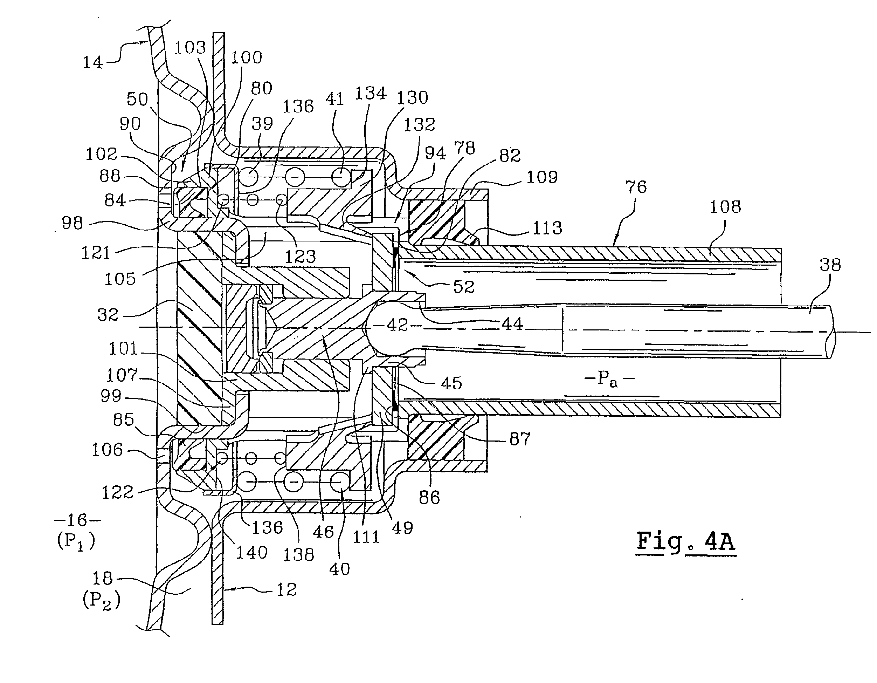

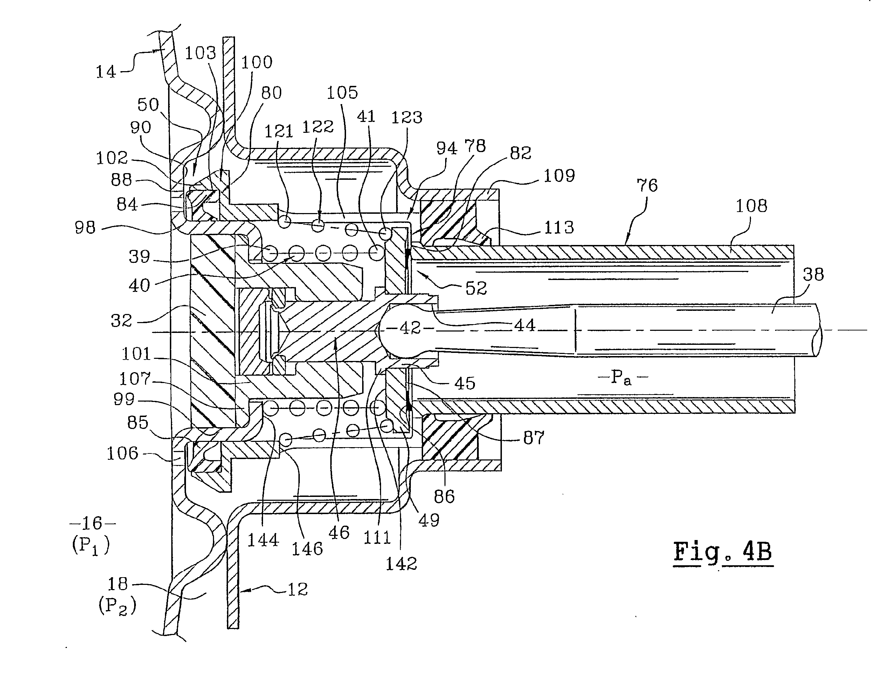

Dans cette configuration, les éléments internes du servomoteur 11 sont susceptibles d'occuper quatre configurations différentes qui ont été représentée respectivement aux figures 4a à 7a et 4b à 7b.

Comme l'illustrent les figures 4a et 4b, la tige de commande 38 est susceptible d'occuper une position de repos. Dans cette position, le clapet 52 d'admission d'air est fermé et le clapet 50 de rééquilibrage est ouvert, de sorte que les chambres avant 16 et arrière 18 sont soumises à la même pression "P1" de dépression. La cloison 14 est donc immobile. La tige de commande 38 et le plongeur 46 sont maintenus dans leur position de repos par le ressort 40 qui exerce un effort de rappel sur la coupelle 49.

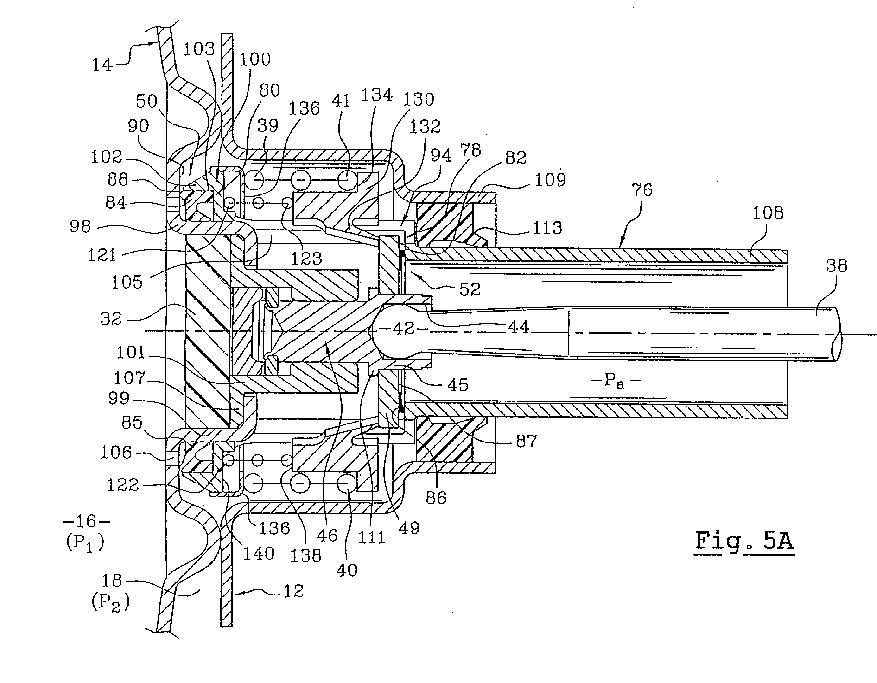

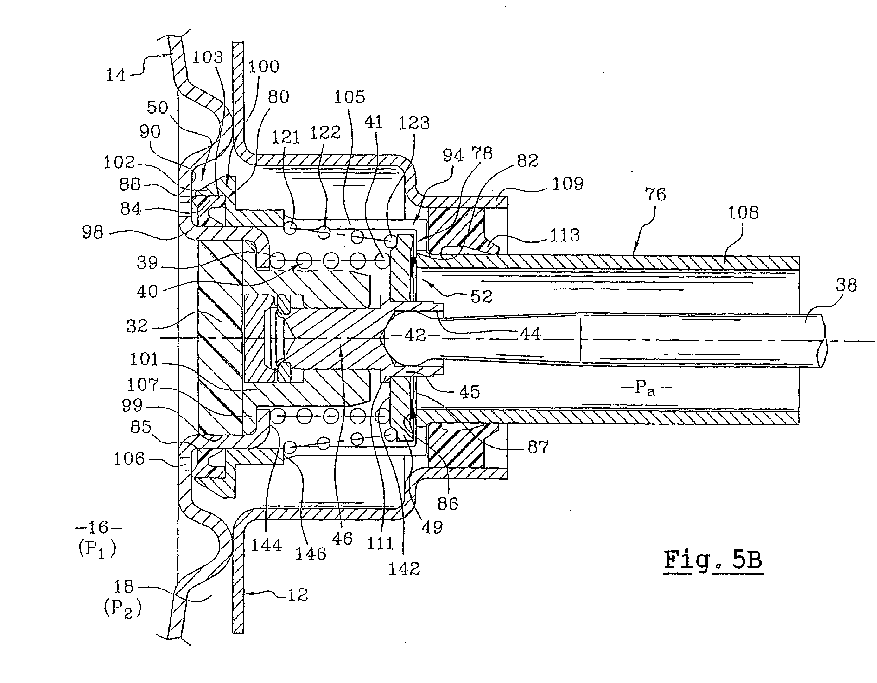

A partir de cette position, une avancée de la tige de commande 38 provoque l'avancée du plongeur 46 et de la coupelle 49 qui y est liée en comprimant le ressort 40, comme représenté aux figures 5a et 5b.

Dans le premier mode de réalisation, la coupelle 49 repousse la bague 130 tubulaire de maintien des premier et deuxième ressorts 40, 122. Le premier ressort 40 étant de raideur élevée, il se comprime tandis que la douille 130 tubulaire entraîne l'élément 76 tubulaire par l'intermédiaire du ressort 122 de rigidité réduite jusqu'à ce que le joint 84 vienne en contact avec la partie de la face arrière 90 de la cloison 14, ce qui provoque la fermeture du clapet de rééquilibrage 50, comme représenté à la figure 5a.

Dans le second mode de réalisation, le premier ressort 40 étant de raideur élevée, il se comprime tandis que la coupelle 49 entraîne l'élément 76 tubulaire par l'intermédiaire du ressort 122 de rigidité réduite jusqu'à ce que le joint 84 vienne en contact avec la partie de la face arrière 90 de la cloison 14, ce qui provoque la fermeture du clapet de rééquilibrage 50, comme représenté à la figure 5b.

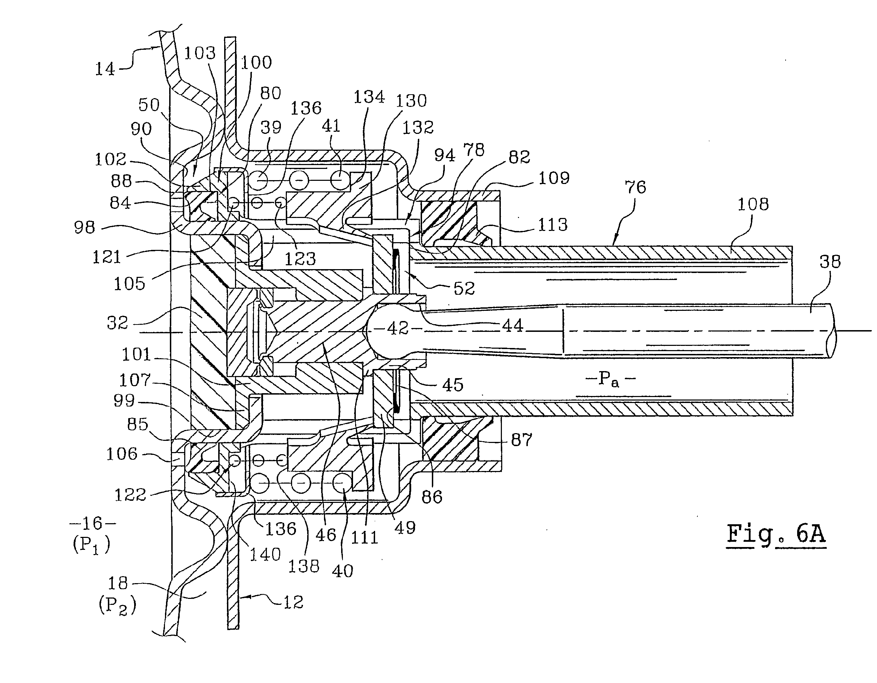

Dans le premier mode de réalisation, en poursuivant son avancée, la tige 38 de commande, actionnant le plongeur 46, comprime alors le ressort 122 par l'intermédiaire de la bague 130, ce qui amène la coupelle 49 et le joint 86 associé à se décoller de la face 78 transversale de jonction des tronçons intermédiaire 94 et arrière 108 de l'élément 76 formant le premier élément 82 d'étanchéité du clapet 52 d'admission, comme représenté à la figure 6a.

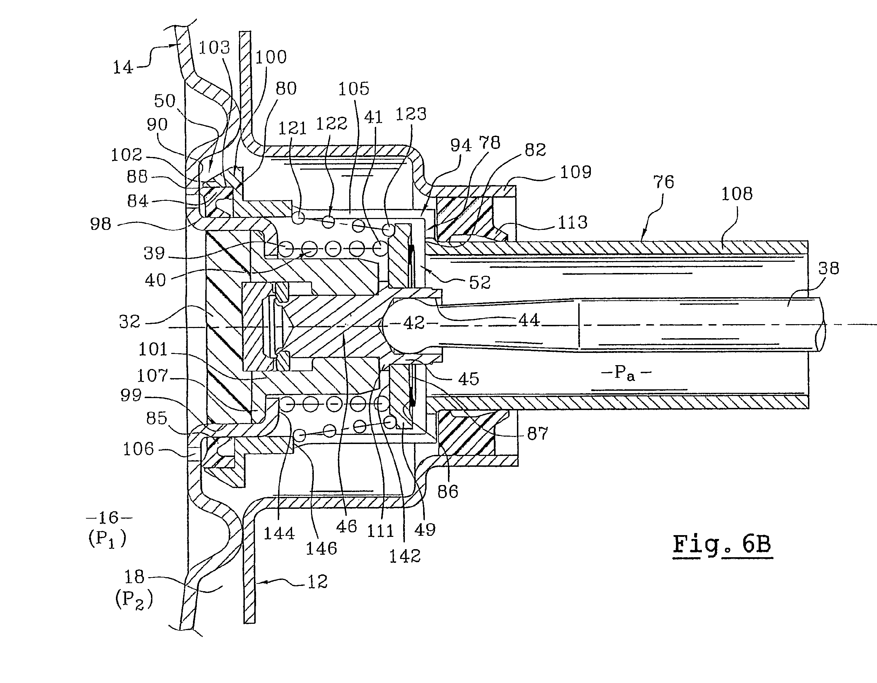

Dans le second mode de réalisation, en poursuivant son avancée, la tige 38 de commande, actionnant le plongeur 46, comprime directement le ressort 122, ce qui amène la coupelle 49 et le joint 86 associé à se décoller de la face 78 transversale de jonction des tronçons intermédiaire 94 et arrière 108 de l'élément 76 formant le premier élément 82 d'étanchéité du clapet 52 d'admission, comme représenté à la figure 6b.

Dans les deux modes de réalisation, l'air à la pression atmosphérique pénètre alors dans la chambre arrière 18 et repousse la cloison mobile 14.

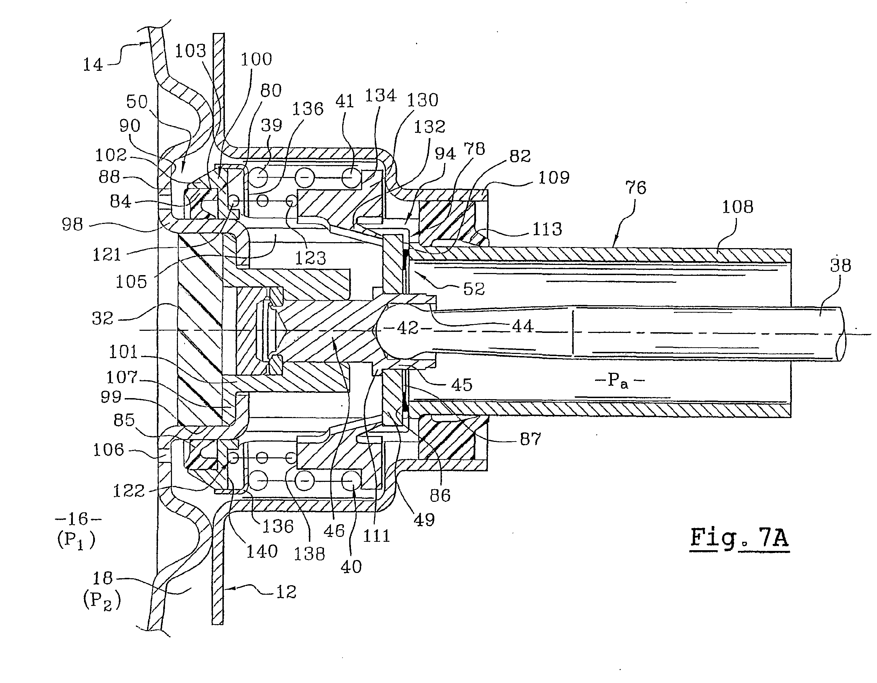

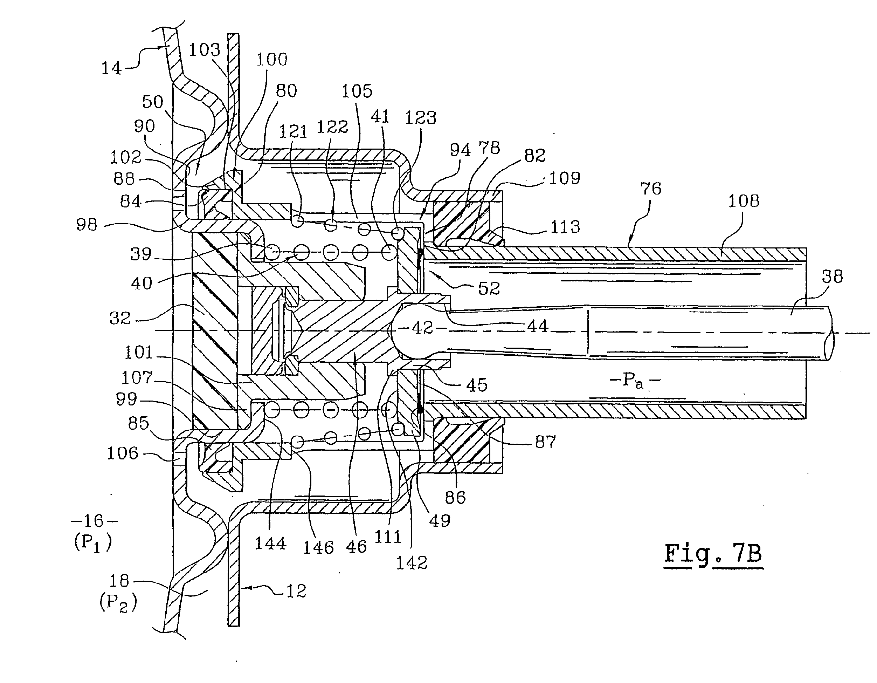

Si la tige de commande 38 est relâchée, comme représenté aux figures 7a et 7b, la décompression du premier ressort 40 provoque le rappel du plongeur 46 vers sa position de repos. Lors de son retour, le plongeur 46 conduit la coupelle 49 à revenir en contact avec la face 78 transversale de jonction des tronçons intermédiaire 94 et arrière 108 de l'élément 76, ce qui referme le clapet 52 d'admission puis provoque le rappel de l'élément tubulaire 76 et par conséquent la réouverture du clapet de rééquilibrage 50. De ce fait, l'air à la pression atmosphérique "Pa" contenu dans la chambre de pression arrière 18 est évacué dans la chambre de pression 14 avant soumise à la pression de dépression "P₁".

L'invention permet donc de bénéficier d'un servomoteur bénéficiant d'un temps de réponse réduit et d'un fonctionnement particulièrement silencieux, qui fait de surcroît largement appel à une conception tubulaire emboutie, ce qui permet d'assurer sa fabrication à moindre coût.

## Revendications

1. Servomoteur (11) pneumatique d'assistance au freinage pour un véhicule automobile,
du type qui comporte une enveloppe (12) rigide à l'intérieur de laquelle est mobile une cloison (14) transversale délimitant de façon étanche une chambre avant (16), soumise à une première pression (P₁), et une chambre arrière (18) soumise à une deuxième pression (P₂) variant entre la première pression (P₁) et une pression (Pₐ) supérieure à la première pression (P₁), qui est susceptible de solliciter une tige (28) d'actionnement d'un maître cylindre (13) associé au servomoteur (11) par l'intermédiaire d'un disque (32) de réaction, et qui est rappelée élastiquement par des premiers moyens de rappel,
du type qui comporte une tige (38) de commande se déplaçant dans l'enveloppe (12) sélectivement en fonction d'un effort axial d'entrée exercé vers l'avant à l'encontre d'un effort de rappel exercé sur la tige (38) par des deuxièmes moyens de rappel,
du type dans lequel les mouvements de la tige (38) de commande sont susceptibles de déterminer les ouvertures et fermetures d'au moins un clapet (52) axial dit "d'admission" qui est interposé entre une source de pression soumise à la pression (Pₐ) supérieure à la première pression (P₁) et la chambre arrière (18), et d'au moins un clapet axial (50) dit "de rééquilibrage" qui est interposé entre la chambre avant (16) et la chambre arrière (18), pour actionner la cloison (14) mobile,
et du type dans lequel un plongeur (46), traversant la cloison (14) mobile et solidaire de l'extrémité de la tige (38) de commande, est susceptible de solliciter directement la tige (28) d'actionnement du maître-cylindre (13) par l'intermédiaire du disque (32) de réaction,
**caractérisé en ce qu'**il comporte :
- un élément (76) tubulaire flottant monobloc, interposé sensiblement radialement entre le plongeur (46) et l'enveloppe (12), qui est mobile axialement et qui est rappelé élastiquement vers la cloison mobile (14) par l'intermédiaire de troisièmes moyens de rappel, dont des faces (78,80) transversales décalées axialement comportent des premiers éléments (82, 84) d'étanchéité des clapets axiaux d'admission et de rééquilibrage (50, 52),
- un second élément (86) transversal complémentaire d'étanchéité du clapet (52) axial d'admission, porté par l'extrémité arrière du plongeur (46),
- un second élément (88) transversal complémentaire d'étanchéité du clapet (50) axial de rééquilibrage, agencé sur au moins une portion de la face arrière (90) de la cloison (14) mobile,
et **en ce que** l'extrémité (45) arrière du plongeur comporte une coupelle (49) qui comporte le second élément (86) transversal complémentaire d'étanchéité du clapet (52) axial d'admission et qui reçoit en appui les extrémités (41, 123) de deux ressorts (40, 122) coaxiaux dont un premier (40), de raideur élevée et dont l'autre extrémité (39) est en en appui sur la cloison (14) mobile, forme les deuxièmes moyens de rappel associés à la tige (38) de commande, et dont le second (122), de raideur réduite et dont l'autre extrémité (121) est en en appui sur une face d'épaulement de l'élément (76) tubulaire, forme les troisièmes moyens de rappel associés au dit élément (76) tubulaire et permet de le solliciter pour fermer le clapet (50) de rééquilibrage.

2. Servomoteur (11) pneumatique selon la revendication précédente, **caractérisé en ce que** l'élément tubulaire (76) flottant comporte:
- un tronçon (100) tubulaire avant, qui est monté de manière étanche autour d'une portée (98) tubulaire de la cloison (14) mobile recevant en coulissement le plongeur (46), dont l'extrémité (102) avant, portant le premier élément (84) d'étanchéité du clapet (50) de rééquilibrage en regard du second élément d'étanchéité (88) du clapet (50) de rééquilibrage porté par la cloison (14) mobile, est agencée radialement à l'extérieur d'au moins un perçage (106) de communication traversant la cloison (14),
- un tronçon (94) tubulaire intermédiaire, qui communique avec la chambre arrière (18),
- un tronçon (108) tubulaire arrière, d'un diamètre inférieur au diamètre du tronçon (94) intermédiaire, qui est guidé en coulissement de manière étanche dans un tronçon (109) tubulaire arrière de l'enveloppe (12), qui forme un conduit d'admission alimenté par la source de pression soumise à la pression (Pₐ) supérieure à la première pression (P₁), et dont une face (78) transversale avant de jonction avec le tronçon (94) intermédiaire porte le second élément (82) d'étanchéité du clapet (52) d'admission en regard de la coupelle (49) du plongeur (46).

3. Servomoteur (11) selon la revendication 2, **caractérisé en ce que** :
- le premier élément (84) d'étanchéité du clapet (50) de rééquilibrage est constitué d'un joint qui est reçu dans le tronçon (100) avant de l'élément (76) tubulaire flottant,
- le second élément (88) d'étanchéité du clapet (50) de rééquilibrage est constitué d'une portion de la face (90) arrière de la cloison (14) mobile,
- le premier élément (82) d'étanchéité du clapet (52) d'admission est constitué d'une face (78) transversale avant d'une paroi de jonction des tronçons (94) intermédiaire et arrière (108) de l'élément (76) tubulaire flottant,
- le second élément (86) d'étanchéité du clapet (52) d'admission est constitué d'un joint qui est porté par une face arrière (87) de la coupelle (49) solidaire du plongeur (46).

4. Servomoteur (11) pneumatique selon la revendication précédente, **caractérisé en ce que** la portée (98) tubulaire de guidage du plongeur portée par la cloison (14) mobile s'étend axialement à partir de la face (90) arrière de la cloison (14) mobile et **en ce que** la cloison (14) mobile comporte une pluralité desdits perçages (106) de communication, ces derniers étant répartis angulairement au travers de la cloison (14) transversale autour de la jonction de sa portée (98) tubulaire et de sa face (90) arrière.

5. Servomoteur (11) selon l'une quelconque des revendications 1 à 4, **caractérisé en ce que** le premier ressort (40) est agencé intérieurement au second ressort (122), et **en ce que** les deux ressorts sont montés à l'intérieur de l'élément (76) tubulaire.

6. Servomoteur (11) selon la revendication précédente quand cette dernière est basée sur les revendications 2 à 4, **caractérisé en ce que** le premier ressort (40) est interposé entre une face avant (142) de la coupelle (49) et une face (144) d'épaulement de la portée (98) tubulaire avant, et **en ce que** le second ressort (122) est interposé entre la face (142) avant de la coupelle (49) et des faces (146) transversales d'extrémité avant de lumières longitudinales opposées du tronçon (94) intermédiaire de l'élément (76) tubulaire qui permettent la communication avec la chambre arrière (18).

7. Servomoteur (11) selon l'une quelconque des revendications 1 à 4, **caractérisé en ce que** le premier ressort (40) est agencé extérieurement au second ressort (122), et **en ce que** les deux ressorts (40, 122) sont montés à l'extérieur de l'élément (76) tubulaire en appui sur la coupelle (49) par l'intermédiaire d'une bague (130) annulaire de maintien dont au moins deux bras (132) radiaux diamétralement opposés traversent des lumières (105) associées de l'élément (76) tubulaire pour prendre appui sur la coupelle (49).

8. Servomoteur (11) selon la revendication précédente quand cette dernière est basée sur les revendications 2 à 4, **caractérisé en ce que** le premier ressort (40) est interposé entre une face (134) d'épaulement de la bague (130) annulaire de maintien et une cloche (136) d'appui qui entoure l'élément (76) tubulaire et qui est solidaire de la cloison mobile (14), et **en ce que** le second ressort (122) est interposé entre une face (138) d'extrémité de la bague annulaire tubulaire et une face (140) transversale d'épaulement de l'élément (76) tubulaire qui délimite son tronçon avant (100) et son tronçon (94) intermédiaire.

9. Servomoteur (11) selon l'une quelconque des revendications 2 à 4, 6 ou 8, **caractérisé en ce que** le tronçon arrière (108) de l'élément (76) tubulaire est monté de manière étanche dans le tronçon arrière (109) de l'enveloppe (12) par l'intermédiaire d'un joint (113) à lèvre.

10. Servomoteur (11) selon l'une quelconque des revendications 2 à 9, **caractérisé en ce que** le plongeur (46) est monté coulissant dans la portée (98) tubulaire de la cloison mobile (14) par l'intermédiaire d'un élément (101) tubulaire coulissant dont une collerette avant (107) est agencée en regard du disque (32) de réaction et qui est susceptible d'être sollicité par une collerette (111) du plongeur (46) pour un effort d'intensité déterminée pour transmettre l'effort de réaction de la tige (28) d'actionnement du maître cylindre pour partie à la tige (38) de commande du servomoteur et pour partie à la cloison (14) mobile.

11. Servomoteur (11) selon les revendications 2 à 10 prises en combinaison, **caractérisé en ce que** la cloison (14) mobile, l'élément (76) tubulaire flottant, et la coupelle (49) solidaire du plongeur (46) sont réalisés par des procédés de découpe et d'emboutissage.

## Claims

1. A pneumatic servomotor (11) for power-assisted braking for a motor vehicle, which servomotor is:
of the type having a rigid casing (12) inside which a moving transverse partition (14) is mounted to define in leaktight manner a front chamber (16) subjected to a first pressure (P₁), and a back chamber (18) subjected to a second pressure (P₂) varying between the first pressure (P₁) and a pressure (Pₐ) that is greater than the first pressure (P₁), which partition can drive an actuating rod (28) for actuating a master cylinder (13) associated with the servomotor (11) via a reaction disk (32), and is returned resiliently by first return means;
of the type having a control rod (38) moving inside the casing (12) selectively as a function of an axial inlet force exerted forwards against a return force applied to the rod (38) by second return means;
of the type in which the movements of the control rod (38) can determine opening and closing of at least one axial valve (52) referred to as an "inlet" valve and which is interposed between a pressure source subjected to the pressure (Pₐ) greater than the first pressure (P₁) and the back chamber (18), and at least one axial valve (50) referred to as a "balancing" valve and which is interposed between the front chamber (16) and the back chamber (18), for actuating the above-described moving partition (14); and
of the type in which a plunger (46) passing through the moving partition (14) and secured to the end of the control rod (38) can drive the actuating rod (28) of the master cylinder (13) directly, via the reaction disk (32);
said servomotor being **characterized in that** it includes:
a one-piece floating tubular element (76) interposed substantially radially between the plunger (46) and the casing (12), which element is mounted to move axially, is returned resiliently towards the moving partition (14) by third return means, and has axially offset transverse faces (78, 80) that are provided with first sealing elements (82, 84) for sealing the axial inlet and balancing valves (50, 52);
- a complementary transverse second sealing element (86) for sealing the inlet axial valve (52), which element is carried by the back end of the plunger (46); and
- a complementary transverse second sealing element (88) for sealing the balancing axial valve (50), which element is provided on at least a portion of the back face (90) of the moving partition (14);
and **in that** the back end (45) of the plunger (46) is provided with a dish-shaped washer (49) which includes the complementary transverse second sealing element (86) for sealing the inlet axial valve (52), and which receives in abutment the ends (41, 123) of two coaxial springs (40, 122), namely a first spring (40) of high stiffness whose other end (39) is in abutment against the moving partition (14), and which forms the second return means associated with the control rod (38), and a second spring (122) of low stiffness whose other end (121) is in abutment against a shoulder face of the tubular element (76), and which forms the third return means associated with said tubular element (76) and which enables said tubular element to be urged to close the balancing valve (50).

2. A pneumatic servomotor (11) according to any preceding claim, **characterized in that** the floating tubular element (76) comprises:
a front tubular segment (100) which is mounted in leaktight manner around a tubular bearing (98) on the moving partition (14), which bearing slidably receives the plunger (46) whose front end (102) that carries the first sealing element (84) of the balancing valve (50) facing the second sealing element (88) of the balancing valve (50) that is carried by the moving partition (14) is disposed radially outside at least one communication hole (106) passing through the partition (14);
an intermediate tubular segment (94) which communicates with the back chamber (18); and
a back tubular segment (108) which is of diameter smaller than the diameter of the intermediate segment (94), which is slidably guided in leaktight manner in a back tubular segment (109) of the casing (12) that forms an inlet duct fed by the pressure source subjected to the pressure (Pₐ) greater than the first pressure (P₁), and whose front transverse face (78) connecting to the intermediate segment (94) carries the second sealing element (82) of the inlet valve (52) facing the dish-shaped washer (49) of the plunger (46).

3. A servomotor (11) according to claim 2, **characterized in that**:
the first sealing element (84) of the balancing valve (50) is constituted by a gasket which is received in the front segment (100) of the floating tubular element (76);
the second sealing element (88) of the balancing valve (50) is constituted by a portion of the back face (90) of the moving partition (14);
the first sealing element (82) of the inlet valve (52) is constituted by a front transverse face (78) of a wall interconnecting the intermediate segment (94) and the back segment (108) of the floating tubular element (76); and
the second sealing element (86) of the inlet valve (52) is constituted by a gasket which is carried by a back face (87) of the dish-shaped washer (49) that is secured to the plunger (46).

4. A pneumatic servomotor (11) according to the preceding claim, **characterized in that** the tubular bearing (98) for guiding the plunger, which bearing is carried by the moving partition (14) extends axially from the back face (90) of the moving partition (14), and **in that** the moving partition (14) is provided with a plurality of said communication holes (106) being distributed angularly through the transverse partition (14) around the junction where its tubular bearing (98) meets its back face (90).

5. A servomotor (11) according to any one of claims 1 to 4, **characterized in that** the first spring (40) is disposed inside the second spring (122), and **in that** the two springs are mounted inside the tubular element (76).

6. A servomotor (11) according to the preceding claim when said preceding claim is based on claims 2 to 4, **characterized in that** the first spring (40) is interposed between a front face (142) of the dish-shaped washer (49) and a shoulder face (144) of the front tubular bearing (98), and **in that** the second spring (122) is interposed between the front face (142) of the dish-shaped washer (49) and front end transverse faces (146) of opposite longitudinal slots in the intermediate segment (94) of the tubular element (76), which slots make it possible for communication to be established with the back chamber (18).

7. A servomotor (11) according to any one of claims 1 to 4, **characterized in that** the first spring (40) is disposed outside the second spring (122), and **in that** the two springs (40, 122) are mounted outside the tubular element (76) in abutment against the dish-shaped washer (49) via an annular holding ring (130) having at least two diametrically opposite radial arms (132) passing through associated slots (105) in the tubular element (76) to come to bear on the dish-shaped washer (49).

8. A servomotor (11) according to the preceding claim when said preceding claim is based on claims 2 to 4, **characterized in that** the first spring (40) is interposed between a shoulder face (134) of the annular holding ring (130) and a bearing cup (136) which surrounds the tubular element (76) and which is secured to the moving partition (14), and **in that** the second spring (122) is interposed between an end face (138) of the tubular annular ring and a shoulder transverse face (140) of the tubular element (76) that defines the front segment (100) and the intermediate segment (94) thereof.

9. A servomotor (11) according to any one of claims 2 to 4, 6 or 8, **characterized in that** the back segment (108) of the tubular element (76) is mounted in leaktight manner in the back segment (109) of the casing (12) via a lip gasket (113).

10. A servomotor (11) according to any one of claims 2 to 9, **characterized in that** the plunger (46) is mounted to slide in the tubular bearing (98) of the moving partition (14) via a slidably mounted tubular element (101) having a front collar (107) which is disposed facing the reaction disk (32) and which can be driven by a collar (111) on the plunger (46) for a force of determined magnitude to transmit the reaction force from the actuating rod (28) of the master cylinder in part to the control rod (38) of the servomotor and in part to the moving partition (14).

11. A servomotor (11) according to claims 2 to 10 taken in combination, said servomotor being **characterized in that** the moving partition (14), the floating tubular element (76), and the dish-shaped washer (49) secured to the plunger (46) are made by implementing cutting and stamping methods.

## Patentansprüche

1. Pneumatischer Servomotor (11) zur Bremsunterstützung für ein Kraftfahrzeug,
vom Typ mit einem starren Gehäuse (12), in dem eine quer verlaufende Trennwand (14) beweglich ist, die in dichter Weise eine vordere Kammer (16), die einem ersten Druck (P₁) ausgesetzt ist, und eine hintere Kammer (18) abgrenzt, die einem zweiten Druck (P₂) ausgesetzt ist, welcher zwischen dem ersten Druck (P₁) und einem Druck (Pₐ) variiert, der höher ist als der erste Druck (P₁), die mittels einer Reaktionsscheibe (32) eine Betätigungsstange (28) eines Hauptzylinders (13), der dem Servomotor (11) zugeordnet ist, beaufschlagen kann und die von ersten Rückstellmitteln elastisch zurückgestellt wird,
vom Typ mit einer Steuerstange (38), die sich selektiv in Abhängigkeit von einer axialen Eingangskraft, die nach vorne entgegen einer durch zweite Rückstellmittel auf die Stange (38) ausgeübten Rückstellkraft ausgeübt wird, im Gehäuse (12) bewegt,
vom Typ, bei dem die Bewegungen der Steuerstange (38) die Öffnungs- und Schließvorgänge mindestens eines axialen Ventilelements (52), genannt "Einlassventilelement", das zwischen einer Druckquelle, die dem Druck (Pₐ) ausgesetzt ist, welcher höher ist als der erste Druck (P₁), und der hinteren Kammer (18) angeordnet ist, und mindestens eines axialen Ventilelements (50), genannt "Ausgleichsventilelement", das zwischen der vorderen Kammer (16) und der hinteren Kammer (18) angeordnet ist, bestimmen können, um die bewegliche Trennwand (14) zu betätigen,
und vom Typ, bei dem ein Tauchkolben (46), der die bewegliche Trennwand (14) durchquert und fest mit dem Ende der Steuerstange (38) verbunden ist, die Betätigungsstange (28) des Hauptzylinders (13) mittels der Reaktionsscheibe (32) direkt beaufschlagen kann,
**dadurch gekennzeichnet, dass** er Folgendes aufweist:
- ein einstückiges, schwimmendes, rohrförmiges Element (76), das im Wesentlichen radial zwischen dem Tauchkolben (46) und dem Gehäuse (12) angeordnet ist, axial beweglich ist, über dritte Rückstellmittel elastisch zur beweglichen Trennwand (14) zurückgestellt wird und bei dem quer verlaufende, axial versetzte Flächen (78, 80) erste Dichtelemente (82, 84) der axialen Ventilelemente (50, 52) für den Einlass und den Ausgleich aufweisen,
- ein zweites quer verlaufendes, komplementäres Dichtelement (86) des axialen Einlassventilelements (52), das von dem hinteren Ende des Tauchkolbens (46) getragen ist,
- ein zweites quer verlaufendes, komplementäres Dichtelement (88) des axialen Ausgleichsventilelements (50), das zumindest auf einem Teilstück der hinteren Fläche (90) der beweglichen Trennwand (14) angeordnet ist,
und dass das hintere Ende (45) des Tauchkolbens eine Schale (49) aufweist, die das zweite quer verlaufende, komplementäre Dichtelement (86) des axialen Einlassventilelements (52) aufweist und die Enden (41, 123) von zwei koaxialen Federn (40, 122) in Anlage aufnimmt, wobei eine erste Feder (40) mit erhöhter Steifigkeit, bei der das andere Ende (39) an der beweglichen Trennwand (14) anliegt, die zweiten, der Steuerstange (38) zugeordneten Rückstellmittel bildet und die zweite Feder (122), die mit verminderter Steifigkeit ausgeführt ist und deren anderes Ende (121) an einer Absatzfläche des rohrförmigen Elements (76) anliegt, die dritten, dem rohrförmigen Element (76) zugeordneten Rückstellmittel bildet und dessen Beaufschlagung zum Schließen des Ausgleichsventilelements (50) ermöglicht.

2. Pneumatischer Servomotor (11) nach dem vorhergehenden Anspruch, **dadurch gekennzeichnet, dass** das schwimmende, rohrförmige Element (76) Folgendes aufweist:
- einen vorderen rohrförmigen Abschnitt (100), der in dichter Weise um einen rohrförmigen Bereich (98) der beweglichen Trennwand (14) angebracht ist, welcher den Tauchkolben (46) gleitend aufnimmt, bei dem das vordere Ende (102), das das erste Dichtelement (84) des Ausgleichsventilelements (50) gegenüber dem von der beweglichen Trennwand (14) getragenen Dichtelement (88) des Ausgleichsventilelements (50) trägt, radial außerhalb mindestens einer Verbindungsbohrung (106) angeordnet ist, die die Trennwand (14) durchquert,
- einen rohrförmigen Zwischenabschnitt (94), der mit der hinteren Kammer (18) verbunden ist,
- einen hinteren rohrförmigen Abschnitt (108), dessen Durchmesser kleiner ist als der Durchmesser des Zwischenabschnitts (94), der so geführt ist, dass er in dichter Weise in einem hinteren rohrförmigen Abschnitt (109) des Gehäuses (12) gleitet, der eine Einlassleitung bildet, die von der Druckquelle gespeist wird, die dem Druck (Pₐ) ausgesetzt ist, der höher ist als der erste Druck (P₁), und bei dem eine vordere quer verlaufende Fläche (78) zur Verbindung mit dem Zwischenabschnitt (94) das zweite Dichtelement (82) des Einlassventilelements (52) gegenüber der Schale (49) des Tauchkolbens (46) trägt.

3. Servomotor (11) nach Anspruch 2, **dadurch gekennzeichnet, dass**:
- das erste Dichtelement (84) des Ausgleichsventilelements (50) aus einer Dichtung gebildet ist, die in dem vorderen Abschnitt (100) des schwimmenden, rohrförmigen Elements (76) aufgenommen ist,
- das zweite Dichtelement (88) des Ausgleichsventilelements (50) aus einem Teilstück der hinteren Fläche (90) der beweglichen Trennwand (14) gebildet ist,
- das erste Dichtelement (82) des Einlassventilelements (52) aus einer vorderen quer verlaufenden Fläche (78) einer Wand zur Verbindung des Zwischenabschnitts (94) und des hinteren Abschnitts (108) des schwimmenden, rohrförmigen Elements (76) gebildet ist,
- das zweite Dichtelement (86) des Einlassventilelements (52) aus einer Dichtung gebildet ist, die von einer hinteren Fläche (87) der mit dem Tauchkolben (46) fest verbundenen Schale (49) getragen ist.

4. Pneumatischer Servomotor (11) nach dem vorhergehenden Anspruch, **dadurch gekennzeichnet, dass** der rohrförmige Bereich (98) zur Führung des Tauchkolbens, der von der beweglichen Trennwand (14) getragen ist, sich ausgehend von der hinteren Fläche (90) der beweglichen Trennwand (14) axial erstreckt und die bewegliche Trennwand (14) mehrere der Verbindungsbohrungen (106) aufweist, wobei diese winkelmäßig durch die quer verlaufende Trennwand (14) hindurch um die Verbindung zwischen ihrem rohrförmigen Bereich (98) und ihrer hinteren Fläche (90) verteilt sind.

5. Servomotor (11) nach einem der Ansprüche 1 bis 4, **dadurch gekennzeichnet, dass** die erste Feder (40) innerhalb der zweiten Feder (122) angeordnet ist und die beiden Federn im rohrförmigen Element (76) angebracht sind.

6. Servomotor (11) nach dem vorhergehenden Anspruch, wenn sich dieser auf die Ansprüche 2 bis 4 stützt, **dadurch gekennzeichnet, dass** die erste Feder (40) zwischen einer vorderen Fläche (142) der Schale (49) und einer Absatzfläche (144) des vorderen rohrförmigen Bereichs (98) angeordnet ist und die zweite Feder (122) zwischen der vorderen Fläche (142) der Schale (49) und quer verlaufenden vorderen Endflächen (146) von gegenüberliegenden Längsöffnungen des Zwischenabschnitts (94) des rohrförmigen Elements (76) angeordnet ist, die die Verbindung mit der hinteren Kammer (18) ermöglichen.

7. Servomotor (11) nach einem der Ansprüche 1 bis 4, **dadurch gekennzeichnet, dass** die erste Feder (40) außerhalb der zweiten Feder (122) angeordnet ist und die beiden Federn (40, 122) außerhalb des rohrförmigen Elements (76) über einen ringförmigen Haltereifen (130), bei dem mindestens zwei diametral entgegengesetzte radiale Arme (132) dem rohrförmigen Element (76) zugeordnete Öffnungen (105) durchqueren, um sich an der Schale (49) abzustützen, in Anlage an der Schale (49) angebracht sind.

8. Servomotor (11) nach dem vorhergehenden Anspruch, wenn sich dieser auf die Ansprüche 2 bis 4 stützt, **dadurch gekennzeichnet, dass** die erste Feder (40) zwischen einer Absatzfläche (134) des ringförmigen Haltereifens (130) und einer Stützhaube (136) angeordnet ist, die das rohrförmige Element (76) umgibt und fest mit der beweglichen Trennwand (14) verbunden ist, und die zweite Feder (122) zwischen einer Endfläche (138) des rohrförmigen, ringförmigen Reifens und einer quer verlaufenden Absatzfläche (140) des rohrförmigen Elements (76) angeordnet ist, die seinen vorderen Abschnitt (100) und seinen Zwischenabschnitt (94) begrenzt.

9. Servomotor (11) nach einem der Ansprüche 2 bis 4, 6 oder 8, **dadurch gekennzeichnet, dass** der hintere Abschnitt (108) des rohrförmigen Elements (76) mittels einer Lippendichtung (113) in dichter Weise in dem hinteren Abschnitt (109) des Gehäuses (12) angebracht ist.

10. Servomotor (11) nach einem der Ansprüche 2 bis 9, **dadurch gekennzeichnet, dass** der Tauchkolben (46) über ein gleitendes rohrförmiges Element (101), bei dem ein vorderer Kragen (107) gegenüber der Reaktionsscheibe (32) angeordnet ist, gleitend in dem rohrförmigen Bereich (98) der beweglichen Trennwand (14) angebracht ist, wobei das rohrförmige Element (101) für eine Kraft mit vorbestimmter Stärke von einem Kragen (111) des Tauchkolbens (46) beaufschlagt werden kann, um die Reaktionskraft der Betätigungsstange (28) des Hauptzylinders zum Teil zur Steuerstange (38) des Servomotors und zum Teil zur beweglichen Trennwand (14) zu übertragen.

11. Servomotor (11) nach den Ansprüche 2 bis 10 in Kombination, **dadurch gekennzeichnet, dass** die bewegliche Trennwand (14), das schwimmende, rohrförmige Element (76) und die mit dem Tauchkolben (46) fest verbundene Schale (49) mit Stanz- und Tiefziehverfahren hergestellt sind.
